# EUROPÄISCHE PATENTANMELDUNG

(11) **EP 4 435 685 A1**
(43) Veröffentlichungstag der Anmeldung: **25.09.2024**
(21) Anmeldenummer: 24152304.2
(22) Anmeldetag: 17.01.2024
(51) Int. Cl.: G06Q 10/04, G06Q 10/0631, G06Q 50/04

(54) **VERFAHREN ZUR STEUERUNG EINES SYSTEMS UND SYSTEM**

(30) Priorität: 21.03.2023 DE 102023107075; 21.03.2023 US 202363453493 P
(71) Anmelder: Netzsch Gerätebau GmbH, 95100 Selb (DE)
(72) Erfinder: BRUNNER, Martin, 95176 Konradsreuth (DE); DENNER, Thomas, 95100 Selb (DE); HILPERT, Thilo, 95100 Selb (DE); WOHLFAHRT, Fabian, 95111 Rehau (DE); SCHÖNEICH, Michael, 95100 Selb (DE); MÜLLER, Michael, 92724 Trabitz (DE); HACHMANN, Thorsten, 95199 Thierstein (DE)
(74) Vertreter: Isarpatent

(57) **Zusammenfassung**

Die vorliegende Erfindung betrifft ein Verfahren zur Steuerung eines Systems (10) mit einer Vielzahl an Messvorrichtungen (100), umfassend ein Empfangen einer Anfrage, einen gewünschten Messwert zu ermitteln, durch eine Steuereinrichtung (200) des Systems (10), ein Erstellen eines Vorschlags durch die Steuereinrichtung (200), welche der Vielzahl an Messvorrichtungen (100) geeignet ist, den bestimmten Messwert zu ermitteln, und ein Ausgeben des erstellten Vorschlags an einen Benutzer des Systems (10) durch die Steuereinrichtung (200). Des Weiteren betrifft die vorliegende Erfindung ein System (10) mit einer Vielzahl an Messvorrichtungen (100).

## Beschreibung

### TECHNISCHES GEBIET DER ERFINDUNG

Die vorliegende Erfindung betrifft ein Verfahren zur Steuerung eines Systems sowie ein System.

### HINTERGRUND DER ERFINDUNG

Das Bestimmen von Eigenschaften verschiedener Materialien ist für viele Anwendungen in Forschung und Industrie von großer Bedeutung. Hierfür werden vielfältige Messvorrichtungen verwendet, welche je nach Anwendungsbereich mitunter sehr komplexe Messvorgänge ermöglichen.

Um diese Messungen durchzuführen ist von einem Benutzer eine gewisse Expertise gefordert, da die technischen und wissenschaftlichen Hintergründe der einzelnen Messvorgänge berücksichtigt werden müssen, um eine erfolgreiche Durchführung der gewünschten Messung sicherstellen zu können. Zusätzlich sind in den meisten Laborumgebungen mehrere Messvorrichtungen vorhanden. Dies bedeutet, dass ein Benutzer mit mehr als einer Messvorrichtung vertraut sein muss, um entscheiden zu können, welche Vorrichtung für welche Messung besonders geeignet ist. Außerdem werden die Messvorrichtungen generell von mehr als einer Person genutzt. Diese müssen sich daher absprechen, welche Vorrichtung zu welchem Zeitpunkt für welche Messung verwendet werden soll.

### ZUSAMMENFASSUNG DER ERFINDUNG

Vor diesem Hintergrund liegt der vorliegenden Erfindung die Aufgabe zugrunde, die Verwendung von Systemen mit mehreren Messvorrichtungen zu erleichtern und effizienter zu gestalten.

Diese Aufgabe wird gelöst durch ein Verfahren mit den Merkmalen des Patentanspruchs 1 sowie durch ein System mit den Merkmalen des Patentanspruchs 9.

Dementsprechend ist ein Verfahren zur Steuerung eines Systems mit einer Vielzahl an Messvorrichtungen vorgesehen. Das Verfahren umfasst ein Empfangen einer Anfrage, einen gewünschten Messwert zu ermitteln, durch eine Steuereinrichtung des Systems, ein Erstellen eines Vorschlags durch die Steuereinrichtung, welche der Vielzahl an Messvorrichtungen geeignet ist, den gewünschten Messwert zu ermitteln, und ein Ausgeben des erstellten Vorschlags an einen Benutzer des Systems durch die Steuereinrichtung.

Des Weiteren ist ein System mit einer Vielzahl an Messvorrichtungen vorgesehen, welches dazu ausgebildet ist, das erfindungsgemäße Verfahren durchzuführen.

Eine der Erfindung zugrunde liegende Idee besteht in der Unterstützung des Benutzers des Systems durch eine dafür ausgelegte Steuereinrichtung. Da die Steuereinrichtung dem Benutzer einen Vorschlag mitteilt, welche der Vielzahl an Messvorrichtungen geeignet ist, den gewünschten Messwert zu ermitteln, kann dieser Schritt bei der Messvorbereitung drastisch abgekürzt werden.

Gemäß eines Ausführungsbeispiels des Verfahrens greift die Steuereinrichtung bei der Erstellung des Vorschlags auf eine Datenbank zurück. Durch geeignete Ausgestaltung der Datenbank kann die Erstellung eines geeigneten Vorschlags vorteilhaft unterstützt werden.

Gemäß einer Weiterbildung des Verfahrens beinhaltet die Datenbank eine Vielzahl an Informationen über Materialeigenschaften, Messmethoden und der Vielzahl an Messvorrichtungen, wobei die Steuereinrichtung basierend auf dieser Vielzahl an Informationen autonom den Vorschlag erstellt. Hierdurch kann die Steuereinrichtung vorteilhaft eine Vielzahl von hypothetisch möglichen Messungen unterstützen.

Gemäß eines Ausführungsbeispiels des Verfahrens aktualisiert die Steuereinrichtung die Datenbank nach Durchführung der Messung. Hierdurch können bei einer Messung gewonnene Erkenntnisse vorteilhaft für zukünftige Messungen genutzt werden.

Gemäß eines Ausführungsbeispiels des Verfahrens beinhaltet erstellte Vorschlag eine sequenzielle oder zeitgleiche Verwendung von mehreren der Vielzahl an Messvorrichtungen. Hierdurch kann die Auslastung der einzelnen Messvorrichtungen vorteilhaft optimiert werden.

Gemäß eines Ausführungsbeispiels des Verfahrens werden für eine Ermittlung des gewünschten Messwerts die vorgenommenen Messungen jeder der verwendeten mehreren der Vielzahl an Messvorrichtungen berücksichtigt. Hierdurch wird die Ermittlung des gewünschten Messwerts vorteilhaft vereinfacht.

Gemäß einer Weiterbildung des Verfahrens erfolgt die Ermittlung des gewünschten Messwerts autonom durch die Steuereinrichtung. Die Unterstützung durch die Steuereinrichtung kann den Benutzer des Systems vorteilhaft weiter entlasten.

Gemäß einer Weiterbildung des Verfahrens berücksichtigt die Steuereinrichtung für das Erstellen des Vorschlags die aktuellen oder zukünftig geplanten Betriebszustände der Vielzahl an Messvorrichtungen. Hierdurch kann die Auslastung der einzelnen Messvorrichtungen vorteilhaft optimiert werden.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: ein schematisches Flussdiagramm für ein Verfahren nach einem Ausführungsbeispiel der vorliegenden Erfindung;
- Fig. 2: eine schematische Darstellung eines Systems mit einer Vielzahl an Messvorrichtungen nach einem Ausführungsbeispiel der vorliegenden Erfindung; und
- Fig. 3: eine schematische Darstellung einer Messvorrichtung nach einem Ausführungsbeispiel der vorliegenden Erfindung.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

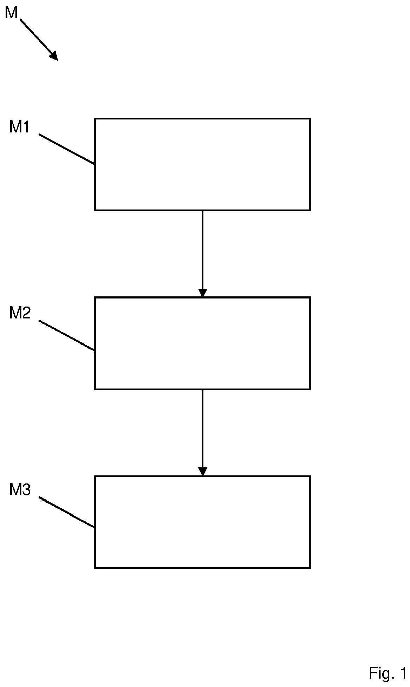

Fig. 1 zeigt ein schematisches Flussdiagramm für ein Verfahren M zum Steuern eines Systems mit einer Vielzahl an Messvorrichtungen nach einem Ausführungsbeispiel der vorliegenden Erfindung.

In einem ersten Verfahrensschritt M1 empfängt eine Steuereinrichtung eine Anfrage, einen gewünschten Messwert zu ermitteln. In einem weiteren Verfahrensschritt M2 erstellt die Steuereinrichtung einen Vorschlag, welche der Vielzahl an Messvorrichtungen geeignet ist, den gewünschten Messwert zu ermitteln. In einem weiteren Verfahrensschritt M3 gibt die Steuereinrichtung den erstellten Vorschlag an einen Benutzer des Systems aus.

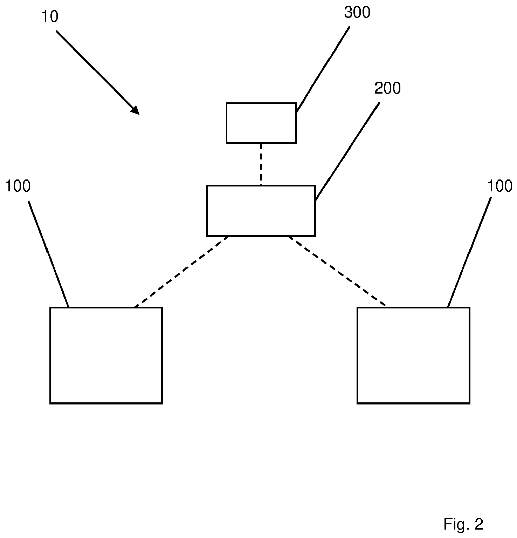

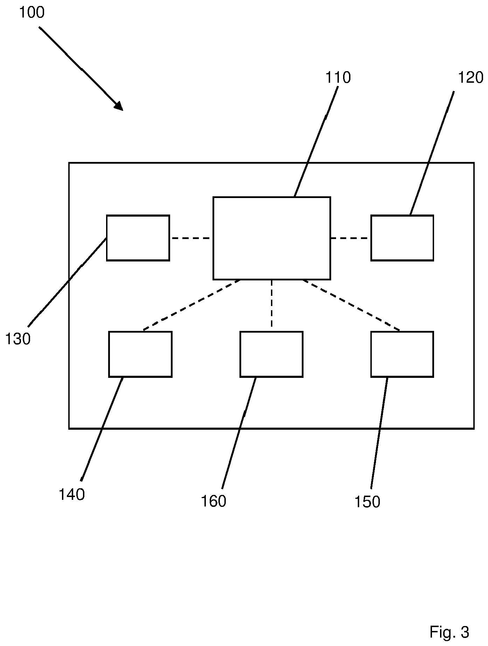

Das gezeigte Verfahren M wird im Nachfolgenden mit Bezug auf die Figuren 2 und 3 im Detail beschrieben.

Fig. 2 zeigt eine schematische Darstellung eines Systems 10 mit einer Vielzahl an Messvorrichtungen 100 nach einem Ausführungsbeispiel der vorliegenden Erfindung.

Das System 10 umfasst im gezeigten Ausführungsbeispiel insgesamt zwei Messvorrichtungen 100, eine Steuereinrichtung 200 sowie eine Datenbank 300.

Die Steuereinrichtung 200 ist dazu ausgebildet, eine Anfrage, einen gewünschten Messwert zu ermitteln, zu empfangen. Diese Anfrage kann von einem Benutzer des Systems 10 beispielsweise über eine (nicht explizit dargestellte) Eingabeeinrichtung der Steuereinrichtung 200 gestellt werden. Diese Eingabeeinrichtung kann hierfür beispielsweise eine Tastatur, einen Touchscreen oder ähnliches umfassen.

Alternativ kann die Anfrage auch über eine externe Schnittstelle an die Steuereinrichtung 200 übertragen werden.

Die Steuereinrichtung 200 ist weiterhin dazu ausgebildet, auf die empfangene Anfrage einen Vorschlag zu erstellen, welche der Vielzahl an Messvorrichtungen 100 geeignet ist, den gewünschten Messwert zu ermitteln. Hierfür kann die Steuereinrichtung 200 auf die Datenbank 300 zurückgreifen. Die Datenbank 200 kann hierbei eine Vielzahl an Informationen über Materialeigenschaften, Messmethoden und der Vielzahl an Messvorrichtungen beinhalten. In diesem Fall erstellt die Steuereinrichtung 200 den Vorschlag autonom basierend auf dieser Vielzahl an Informationen. Bei diesem Vorgang könnte die Steuereinrichtung 200 eventuell auch ermitteln, dass der gewünschte Messwert mit keiner der Messvorrichtungen 100 ermittelt werden kann. In diesem Fall kann anstelle einer Parameterliste auch eine entsprechende Benachrichtigung ausgegeben werden.

Die Steuereinrichtung 200 ist weiterhin dazu ausgebildet, den erstellten Vorschlag an einen Benutzer des Systems 10 auszugeben. Hierfür kann beispielsweise eine (nicht explizit dargestellte) Ausgabeeinrichtung der Steuereinrichtung 200 verwendet werden. Diese Ausgabeeinrichtung kann hierfür beispielsweise einen Bildschirm und/oder Lautsprecher umfassen. Beispielsweise können auch die Ausgabeeinrichtung und die Eingabeeinrichtung der Steuereinrichtung 200 in einem Touchscreen zusammengefügt sein. Alternativ oder zusätzlich können auch einzelne Komponenten der Messvorrichtungen 100 hervorgehoben werden, in dem etwa zu betätigende Schaltfelder oder dergleichen beleuchtet werden.

Insbesondere kann die Steuereinrichtung 200 auch dazu ausgebildet sein, die Datenbank 300 nach der Durchführung der bestimmten Messung zu aktualisieren. Die Messergebnisse bezüglich der Materialeigenschaften der bei der Messung verwendeten Probe können dann zum Beispiel in die Datenbank 300 aufgenommen werden und stehen dann für zukünftige Messungen und Messpläne zur Verfügung. Auch vorgegebene Messpläne können überarbeitet werden, wobei die durchgeführte Messung berücksichtigt wird. Die hierfür nötigen Informationen bezüglich der durchgeführten Messung können entweder von einem Benutzer Systems 10 an die Steuereinrichtung 200 übergeben werden. Alternativ oder zusätzlich kann die Steuereinrichtung 200 die relevanten Informationen auch direkt von den Messvorrichtungen 100 erhalten.

Der von der Steuereinrichtung 200 erstellte Vorschlag kann eine sequenzielle oder zeitgleiche Verwendung von mehreren der Vielzahl an Messvorrichtungen beinhalten. Dies kann vorteilhaft sein, wenn etwa aus Gründen der Reproduzierbarkeit der gewünschte Messwert mehrmals ermittelt werden soll oder falls für die Ermittlung des gewünschten Messwerts mehrere verschiedene Messvorgänge durchgeführt werden müssen, um Zwischenergebnisse zu ermitteln, aus welchen der gewünschte Messwert indirekt abgeleitet werden soll. In so einem Fall kann es vorgesehen sein, dass für die Ermittlung des gewünschten Messwerts, die vorgenommenen Messungen jeder der verwendeten mehreren der Vielzahl an Messvorrichtungen 100 berücksichtigt werden. In diesem Fall kann die Ermittlung des gewünschten Messwerts autonom durch die Steuereinrichtung 200 erfolgen.

Die Steuereinrichtung 200 kann auch dazu ausgebildet sein, für das Erstellen des Vorschlags die aktuellen oder zukünftig geplanten Betriebszustände der Vielzahl an Messvorrichtungen zu berücksichtigen. So kann etwa eine der Messvorrichtungen 100 vorgeschlagen werden, selbst wenn eine andere der Messvorrichtungen 100 prinzipiell besser für die Ermittlung des gewünschten Messwerts geeignet wäre, falls diese andere Messvorrichtung 100 auf absehbare Zeit bereits für andere Messvorgänge vorgesehen sein sollte.

In Fig. 2 sind zwei Messvorrichtungen 100 gezeigt. Es können allerdings beliebige Anzahlen an Messvorrichtungen 100 vorgesehen sein. Die Messvorrichtungen 100 können funktionsgleich ausgebildet sein oder für die Durchführung jeweils unterschiedlicher Messungen ausgebildet sein. Dies erlaubt je nach Anwendungsbereich die zeitgleiche oder sequentielle Durchführung der jeweiligen Messvorgänge. Die Messvorrichtungen 100 können insbesondere als Vorrichtungen für die thermische Analyse von Materialien ausgebildet sein. Insbesondere können die Messvorrichtungen 100 für die Durchführung von Differenz-Thermoanalysen, dynamischer Differenzkalometrie, dynamischmechanischer Analysen, thermomechanischer Analysen oder dergleichen ausgebildet sein. Bei derartigen Messvorgängen kann die Unterstützung eines Benutzers durch die Steuereinrichtung 200 besonders vorteilhaft sein.

Die Datenbank 300 wird hier als spezifischer Bestandteil des Systems 10 gezeigt. Es ist jedoch auch denkbar, dass die Steuereinrichtung 200 und/oder die Datenbank 300 mit einem erweiterten Netzwerk, insbesondere mit dem Internet, verbunden ist und relevante Informationen direkt über dieses Netzwerk bezieht anstatt sie lokal abzuspeichern.

Fig. 3 zeigt eine schematische Darstellung einer Messvorrichtung 100, welche in einem System nach einem Ausführungsbeispiel der vorliegenden Erfindung vorgesehen sein kann.

Die Messvorrichtung 100 weist eine Steuereinrichtung 110, eine Datenbank 120, eine Sensoreinrichtung 130, eine Ausgabeeinrichtung 140, eine Eingabeeinrichtung 150, und eine Probenaufnahmeeinrichtung 160 auf.

Die Steuereinrichtung 110 kann dazu ausgebildet sein, mit einer Steuereinrichtung 200 des übergeordneten Systems 10 zu kommunizieren und die von der Steuereinrichtung 200 des Systems 10 ermittelten Vorschläge und dergleichen direkt an der Messvorrichtung 100 umzusetzen. Hierfür kann die Steuereinrichtung 110 auf eine in die Messvorrichtung 100 integrierte Datenbank 120 zurückgreifen, auf welcher für die Messvorrichtung 120 relevante Informationen abgespeichert sein können. Prinzipiell können die Steuereinrichtung 110 sowie die Datenbank 120 der Messvorrichtung über die gleichen Funktionalitäten wie die entsprechenden Komponenten des übergeordneten Systems 10 verfügen und diese unterstützen.

Die Sensoreinrichtung 130 kann dazu ausgebildet sein, Messparameter während des Ermittelns des Messwerts zu überwachen. In dem Fall kann die Steuereinrichtung 110 dazu ausgebildet sein, die überwachten Messparameter auszuwerten. Dies kann es der Steuereinrichtung 110 ermöglichen, eine Warnung auszugeben, die Ermittlung des Messwerts zu unterbrechen, oder die Parameter der Messvorrichtung 100 autonom zu ändern, falls dies bei der Ermittlung des gewünschten Messwerts notwendig sein sollte.

Die Ausgabeeinrichtung 140 kann beispielsweise einen Bildschirm und/oder Lautsprecher umfassen. Die Eingabeeinrichtung 150 kann beispielsweise eine Tastatur, einen Touchscreen oder ähnliches umfassen. Beispielsweise können auch die Ausgabeeinrichtung 140 und die Eingabeeinrichtung 150 in einem Touchscreen zusammengefügt sein. Einzelne Komponenten der Messvorrichtung 100, wie etwa die Eingabeeinrichtung 150 und die Probenaufnahmeeinrichtung 160, können dazu ausgebildet sein, hervorgehoben zu werden, in dem etwa zu betätigende Schaltfelder oder dergleichen beleuchtet werden.

### BEZUGSZEICHENLISTE

- 10: System
- 100: Messvorrichtung
- 110: Steuereinrichtung
- 120: Datenbank
- 130: Sensoreinrichtung
- 140: Ausgabeeinrichtung
- 150: Eingabeeinrichtung
- 160: Probenaufnahmeeinrichtung
- 200: Steuereinrichtung
- 300: Datenbank
- M: Verfahren
- M1: Verfahrensschritt
- M2: Verfahrensschritt
- M3: Verfahrensschritt

## Patentansprüche

1. Verfahren (M) zur Steuerung eines Systems (10) mit einer Vielzahl an Messvorrichtungen (100), umfassend
- ein Empfangen (M1) einer Anfrage, einen gewünschten Messwert zu ermitteln, durch eine Steuereinrichtung (200) des Systems (10);
- ein Erstellen (M2) eines Vorschlags durch die Steuereinrichtung (200), welche der Vielzahl an Messvorrichtungen (100) geeignet ist, den bestimmten Messwert zu ermitteln; und
- ein Ausgeben (M3) des erstellten Vorschlags an einen Benutzer des Systems (10) durch die Steuereinrichtung (200).

2. Verfahren (M) nach Anspruch 1, wobei die Steuereinrichtung (200) für das Erstellen des Vorschlags auf eine Datenbank (300) zurückgreift.

3. Verfahren (M) nach Anspruch 2, wobei die Datenbank (300) eine Vielzahl an Informationen bezüglich Materialeigenschaften, Messmethoden und der Vielzahl an Messvorrichtungen (100) beinhaltet, und die Steuereinrichtung (200) den Vorschlag autonom basierend auf der Vielzahl an Informationen erstellt.

4. Verfahren (M) nach einem der Ansprüche 2 oder 3, wobei die Steuereinrichtung (200) die Datenbank (300) nach Ermittlung des Messwerts aktualisiert.

5. Verfahren (M) nach einem der vorhergehenden Ansprüche, wobei der erstellte Vorschlag eine sequenzielle oder zeitgleiche Verwendung von mehreren der Vielzahl an Messvorrichtungen (100) beinhaltet.

6. Verfahren (M) nach Anspruch 5, wobei für eine Ermittlung des gewünschten Messwerts die vorgenommenen Messungen jeder der verwendeten mehreren der Vielzahl an Messvorrichtungen (100) berücksichtigt wird.

7. Verfahren (M) nach Anspruch 6, wobei die Ermittlung des gewünschten Messwerts autonom durch die Steuereinrichtung (200) erfolgt.

8. Verfahren (M) nach einem der vorhergehenden Ansprüche, wobei die Steuereinrichtung (200) für das Erstellen des Vorschlags die aktuellen oder zukünftig geplanten Betriebszustände der Vielzahl an Messvorrichtungen (100) berücksichtigt.

9. System (10) mit einer Vielzahl an Messvorrichtungen (100), welches dazu ausgebildet ist, ein Verfahren (M) nach einem der Ansprüche 1 bis 8 durchzuführen.
